Europäisches Patentamt

European Patent Office

Office européen des brevets

(19)

(11)  EP 0 492 243 B1

(12)  **EUROPÄISCHE PATENTSCHRIFT**

(45)  Veröffentlichungstag und Bekanntmachung des
Hinweises auf die Patenterteilung:
**21.08.1996  Patentblatt 1996/34**

(51)  Int Cl.$^6$: **C08J 11/06**

(21)  Anmeldenummer: **91121060.7**

(22)  Anmeldetag: **09.12.1991**

(54)  **Verfahren zur Isolierung von Polycarbonaten aus ihren Lösungsmitteln mit Kohlendioxid-haltigen Flüssigkeiten**

Process for separating polycarbonates from their solution, using fluids containing carbon dioxide

Procédé de séparation de polycarbonates en solution, avec des fluides renfermant du dioxyde de carbone

(84)  Benannte Vertragsstaaten:
**BE DE ES FR GB IT NL**

(30)  Priorität: **20.12.1990  DE 4040855
04.06.1991  DE 4118230**

(43)  Veröffentlichungstag der Anmeldung:
**01.07.1992  Patentblatt 1992/27**

(73)  Patentinhaber: **BAYER AG
51368 Leverkusen (DE)**

(72)  Erfinder:
• **Paul, Hanns-Ingolf, Dr.
W-5000 Köln 80 (DE)**
• **Treckmann, Rolf, Dipl.-Ing.
W-5000 Köln 80 (DE)**

• **Weymans, Günther, Dr.
W-5090 Leverkusen (DE)**
• **Kirsch, Jürgen, Dr.
W-5090 Leverkusen (DE)**
• **Heuser, Jürgen, Dr.
W-4150 Krefeld (DE)**
• **Elgeti, Klaus, Prof. Dr.
W-5060 Bergisch Gladbach 2 (DE)**

(56)  Entgegenhaltungen:
**EP-A- 0 184 935          EP-A- 0 334 314**

• **MACROMOLECULES Bd. 18, 1. April 1985, Seiten 674 - 680 MCHUGH 'separating polymer solutions with supercritical fluids'**

EP 0 492 243 B1

**Beschreibung**

Gegenstand der vorliegenden Erfindung ist ein Verfahren zur Isolierung von Polycarbonaten aus ihren Lösungsmitteln durch Zugabe Kohlendioxid-haltiger Fluide; bei Temperaturen von 30°C bis 280°C und Drücken von 1 bar bis 1000 bar, in Mengen von 5 bis 5000 Gew.-%, bezogen auf das Gesamtgewicht an Polycarbonat und organischem Lösungsmittel, das dadurch gekennzeichnet ist, daß die Konzentration der Polycarbonate in ihren Lösungsmitteln jeweils zwischen 5 Gew.-% und 80 Gew.-% beträgt, das Kohlendioxid-haltige Fluid aus mindestens 50 Gew.-% Kohlendioxid besteht, und daß der Polycarbonatlösung schon vor den Mischorganen bis zu 25 Gew.-%, bezogen auf die Menge an Polycarbonaten und Lösungsmitteln, Kohlendioxid-haltiges Fluid zugemischt wird.

Eine Variante des Verfahrens ist dadurch gekennzeichnet, daß das restliche Kohlendioxid-haltige Fluid in einem statischen Mischer mit der Polycarbonatlösung vermischt wird und während oder nach dem Mischvorgang das Polycarbonat ausfällt.

Eine Variante des Verfahrens ist auch, daß die Polycarbonat-Fluid-Lösung mit Hilfe einer Düse in einem Abscheidebehälter entspannt wird.

Möglich ist auch, daß das restliche Kohlendioxid-haltige Fluid in einer Zweistoffdüse mit der Polycarbonatlösung vermischt wird und dabei die Gewichts-Einsatzverhältnisse von Fluid und Polycarbonatlösung so gewählt werden, daß das Polycarbonat in der Zweistoffdüse ausfällt.

Aus der EP-A-0 184 935 ist ein Verfahren zur Isolierung von Polymeren aus ihren Lösungsmitteln bekannt, bei dem Kohlendioxid bei 40 bis 150°C und Drücken von 7 bis 210 bar zu einer mehr als 5 %igen Lösung eines Polymers zugegeben wird. Polycarbonate sind in der EP-A-0 184 935 nicht erwähnt. Gemäß EP-A-0 184 935 dient die Zugabe von $CO_2$ nicht zur Ausfällung der Polymeren. Sie dient vielmehr dazu, die Temperatur zu senken, bei der Phasentrennung auftritt. Die Isolierung der Polymeren ist gemäß EP-A-0 184 935 ein separater Schritt, wobei das $CO_2$ vorher entfernt sein dürfte.

Das erfindungsgemäße Verfahren ist durch den Stand der Technik weder erfaßt noch nahegelegt.

Bevorzugte Polycarbonate für das erfindungsgemäße Verfahren sind insbesondere aromatische Polycarbonate auf Basis von Diphenolen. Solche Polycarbonate sind literaturbekannt. Geeignete Diphenole sind in den US-PS 3 028 365, 2 999 835, 3 148 172, 3 275 601, 2 991 273, 3 271 367, 30 962 781, 2 970 131 und 2 999 846, in den DE-OS 1 570 703, 2063 050, 2 063 052, 22 110 956, der französischen Patentschrift 1 561 518 sowie in der DE-OS 3 832 396 (Le A 26 344) und in der DE-OS 3 833 953 (Le A 26 397) beschrieben.

Besonders bevorzugte Diphenole sind

4,4'-Dihydroxydiphenyl,
2,2-Bis-(4-hydroxyphenyl)-propan,
2,2-Bis-(3,5-dimethyl-4-hydroxyphenyl)-propan und
1,1-Bis-(4-hydroxyphenyl)-3,3,5-trimethylyclohexan.

Die Polycarbonate haben bevorzugt Molekulargewichte $\overline{M}w$ (Gewichtsmittel, ermittelt durch Streulichtmessung) zwischen 15.000 und 200.000 g/mol, insbesondere zwischen 20.000 und 80.000 g/mol.

Von diesen Polycarbonaten, die auch Copolycarbonate auf Basis der genannten Diphenol sein können, sind besonders Polycarbonate bzw. Copolycarbonate auf Basis von 2,2-Bis-(4-hydroxyphenyl)-propan mit Kettenabbrechern para-ter-tiär-Butylphenol, Cumylphenol, Phenol und Isooctylphenol, Copolycarbonate aus 2,2-Bis-(4-hydroxyphenyl)-propan mit 2,2-Bis-(3,5-dimethyl-4-hydroxyphenyl)-propan und Copolycarbonate aus 2,2-Bis-(4-hydroxphenyl)-propan mit 1,1-Bis(4-hydroxyphenyl)-3,3,5-trimethylcyclohexan geeignet.

Das erfindungsgemäße Verfahren kann ganz besonders bevorzugt für die Isolierung der als besonders bevorzugt beschriebenen Polycarbonate eingesetzt werden.

Das erfindungsgemäße Verfahren zur Isolierung von Polycarbonaten ist anwendbar, wenn die Polycarbonate aus organischen Lösungsmitteln mit Konzentration von 5 bis 80 Gew.-% Polycarbonat bezogen auf das Gewicht der Mischung Polycarbonat/Lösungsmittel, zu isolieren sind. Bevorzugt enthalten die Polycarbonatlösungen zwischen 10 und 60 Gew.-%, besonders bevorzugt zwischen 14 und 26 Gew.-% Polycarbonat. Als für die Polycarbonate inerte organische Lösungmittel kommen generell diejenigen organischen Verbindungen in Frage, die das Polycarbonat bei Temperaturen unterhalb 240°C zu lösen in der Lage sind.

Für Polycarbonate geeignete Lösungsmittel sind also beispielsweise Methylenchlorid, Monochlorbenzol, Aceton, Acetonitril sowie Mischungen dieser Lösungsmittel, insbesondere Lösungsmittelgemische aus Methylenchlorid und Chlorbenzol sowie Methylenchlorid und Chlorbenzol allein.

Erfindungsgemäß geeignete kohlendioxidhaltige Fluide sind Fluide die zu wenigstens 50 Gew.-%, bezogen auf das Gesamtgewicht an Flüssigkeit, reines Kohlendioxid enthalten. Insbesondere geeignet sind diese mindestens 50 Gew.-% Kohlendioxid enthaltenden Fluide wenn die jeweiligen, zu 100 Gew.-% komplementären Bestandteile der Fluide Gase oder Gasgemische sind, deren kritische Punkte in einem verfahrenstechnisch zugänglichen Bereich liegen, d.h. kritische Temperaturen unterhalb 200°C und kritische Drücke unterhalb 200 bar haben. Als solche Gase kommen daher insbesondere Distickstoffoxid, Methan, Stickstoff, Propan, Difluorchlormethan, Trifluormethan, Ethan, Ammoniak, Schwefelhexa-fluorid und/oder Schwefeldioxid in Frage.

Bevorzugt werden als Zusatz zu Kohlendioxid eingesetzt: Schwefeldioxid, Propan, Stickstoff, Ethan, Ammoniak und/oder Trifluormethan, wobei besonders bevorzugt nicht mehr als 30 Gew.-% - bezogen auf das Gesamtgewicht an eingesetztem Fluid -, insbesondere nicht mehr als 10 Gew.-% andere Fluide als Kohlendioxid eingesetzt werden. Ganz besonders bevorzugt ist die Verwendung von im wesentlichen reinem Kohlendioxid.

Es kann von Vorteil sein, auch mit dem Polycarbonat-Lösungsmittel vermischtes Kohlendioxid im überkritischen Zustand mit der Polycarbonatlösung zu vereinigen.

Der Temperaturbereich, in dem es günstig ist, das Kohlendioxid-haltige Fluid der Polycarbonatlösung zuzugeben, richtet sich nach dem Polycarbonat und seinem speziellen Lösungsmittel sowie der Konzentration des Polycarbonats, im Lösungsmittel. Im allgemeinen wählt man einen Temperaturbereich, in dem das vorgegebene Polycarbonat im Lösungsmittel zu vorzugsweise 10 Gew -%, besonders bevorzugt zu mindestens 14 Gew.-% gelöst ist. Die Polycarbonatkonzentrationen sollten unter 80 Gew.-%, bevorzugt unter 60 Gew.-%, besonders bevorzugt zwischen 14 und 26 Gew.-% liegen. Übliche Temperaturen sind daher zwischen 30°C und 280°C, bevorzugt zwischen 30°C und 100°C und übliche Drücke zwischen 1 bar und 1000 bar, bevorzugt zwischen 10 bar und 500 bar. Es kann von Vorteil sein, im Bereich der kritischen Temperatur und des kritischen Druckes des jeweiligen Kohlendioxid-haltigen Fluids zu arbeiten.

Die Mengen an erfindungsgemäß einzusetzendem Fluid hängt ab von der Konzentration der zu isolierenden Polycarbonats in seinem organischen Lösungsmittel. Übliche Konzentrationen sind 5 - 5000Gew-% erfindungsgemäßes kohlendioxidhaltiges Fluid, bezogen auf das Gesamtgewicht an Polycarbonat und organischen Lösungsmittel.

Die Zugabe des Kohlendioxid-haltigen Fluids erfolgt durch Einmischen. Dies kann kontinuierlich oder diskontinuierlich geschehen. Geeignete Aggregate sind Rührkessel, Autoklaven, Mischorgane wie z.B. statische Mischer des Typs BKM, Zweistoffdüsen mit einer Verweil- und Mischzeit von mindestens 20 Millisekunden wie z.B. Vollkegeldüsen, Hohlkegelexzenterdüsen, Axialkohlkegeldüsen und Pneumatik-Zerstäuberdüsen. Es kann von Vorteil sein, nicht sofort nach dem Vermischen die Mischung zu entspannen, sondern zunächst nach dem Mischen noch eine gewisse Zeit zu verweilen. Typische Verweilzeiten liegen zwischen 0,1 und 100 Sekunden, insbesondere bei mehr als 1 Sekunde.

Während oder nach dem Einmischen fällt das Polycarbonat aus seinem organischen Lösungsmittel aus. Anschließend (nach einer Verweilzeit von mindestens 20 Millisekunden) oder noch während des Fällvorgangs wird durch Druckabsenkung, z.B. durch Entspannung in einen Behälter oder durch Verdüsung, die Lösung entspannt.

Geeignete Temperaturen bei dcr Entspannung sind insbesondere Temperaturen in der Nähe des Siedepunktes des Polycarbonat-Lösungsmittels, so daß bei der Entgasung das Kohlendioxid-haltige Fluid sich zusammen mit dem organischen Lösungsmittel verflüchtigt

Es sei das erfindungsgemäße Verfahren beispielhaft für die Isolierung von Polycarbonat aus Methylenchlorid beschrieben:

Die Polycarbonatlösung, beispielsweise zwischen 14 und 26 Gew.-% in reinem Methylenchlorid, wird bei Drücken zwischen 1 und 3 bar und Temperaturen von 20 bis 80°C vorgelegt in einem Rührkessel. In diesen Rührkessel wird unter ständigem Rühren dann Kohlendioxidhaltiges Fluid zugegeben, bis ein Druckanstieg von mindestens 60 bar beobachtet wird. Anschließend kann unter weiterem Rühren und unter weiterer Dosierung von kohlendioxidhaltigem Fluid am Boden des Rührkessels kontinuierlich unter Beibehaltung des Rührkesselinnendrucks Polycarbonatlösung über einen Ablaß entspannt werden.

Hierbei ist notwendig zunächst eine gewisse Menge beispielsweise bis zu 25 Gew.-%, bezogen auf die Menge an Polymer und Lösungsmittel, an Kohlendioxid-haltigem Fluid in einem Rührkessel oder über einen anderen Mischer der Polycarbonatlösung zuzurühren. Dabei ist die Menge so gewählt, daß das Polycarbonat gerade noch nicht aus der organischen Lösung ausfällt. Anschließend wird in einer Zweistoffdüse bei Drücken zwischen 80 und 250 bar weiteres kohlendioxidhaltiges Fluid der organischen Polycarbonatlösung zugeführt und anschließend in einem Abscheidebehälter entspannt. Anstelle einer Zweistoffdüse als Misch- und Entspannungsorgan kann man auch eine Düse ohne Mischfunktion als Entspannungsorgan und einen statischen Mischer - beispielsweise vom Typ BKM - als Mischorgan verwenden.

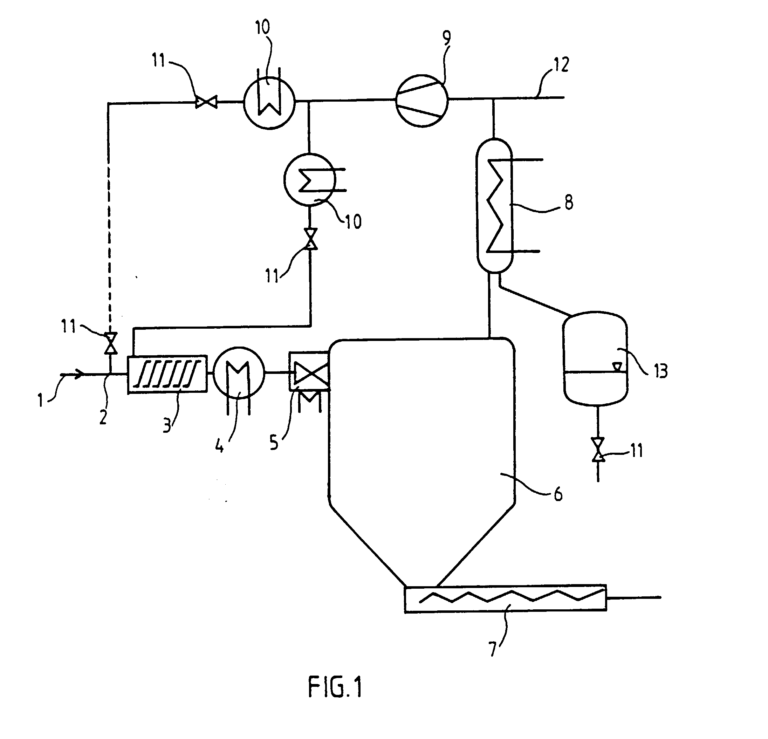

Ein solches nach dem erfindungsgemäßen Verfahren speziell für Polycarbonat-Methylenchlorid-Lösungen realisiertes Isolierverfahren ist in der Figur 1 wiedergegeben. Die von der Stelle (1) kommende Polycarbonat-Methylenchlorid-Lösung wird gegebenenfalls über einen Mischer M1 (2) mit Kohlendioxidhaltigem Fluid so mit Kohlendioxid-Mengen vorbehandelt, daß Polycarbonat noch nicht ausfällt. Anschließend werden über einen statischen Mischer M2 (3) Fluidmengen zwischen weiteren 5 bis 500 Gew.-% bei Drücken zwischen 80 und 300 bar hinzugegeben. Das Dreistoffsystem Polycarbonat-Methylenchlorid-Fluid wird dann über den Vorwärmer W1, (4) auf Temperaturen zwischen 60 und 80°C gebracht und über eine Düse ohne Mischfunktion (Einstoffdüse) D1, (5) in einen Abscheidebehälter AB (6), in dem Drücke zwischen 1 und 10 bar vorliegen, entspannt Das bei der Entspannung und Verdüsung entstehende Polycarbonatpulver kann beispielsweise über eine Schnecke AS, (7) am Boden des Abscheiders AB (6) ausgetragen werden. Es kann auch von Vorteil sein, am Boden des Abscheiders ein Wirbelbett zu verwenden, welches bereits Methylenchloridarmes Polycarbonat mit dem im Abscheiderbereich noch vorhandenen Methylenchloridreicheren Polycarbonatpulver rückvermischt und damit die Pulverkorngröße zu variieren erlaubt Die Düse D1, (5) wird gegebenenfalls beheizt, um Temperaturabsekungen bei der Entspannung zu vermeiden. Das Methylenchlorid entweicht zusammen mit dem Kohlendioxid aus dem Abscheider und wird dem Kondensator KO (8) zugeführt, in welchem das Lösungsmittel kondensiert und das Kohlendioxidhaltige Fluid getrennt dem Prozeß zurückgeführt, werden (z.B. über Kompressor KP (9), Erwärmer WU, (10)und Ventil VE (11)). Wie bereits beschrieben, kann anstelle des statischen Mischers M2, (3) und der Einstoffdüse D1 (5) auch eine Zweistoffdüse gewählt werden. Es kann auch von Vorteil sein, als Mischorgan M1 (2) einen statischen Mischer einzusetzen. Weiterhin kann zur Optimierung der Pulverkorngröße auch eine Verweilzeit zwischen 20 Milli-Sekunden und 10 Sekunden zwischen Einmischung des kohlendioxidhaltigen Fluids und der Entspannung in einer Düse notwendig werden.

Zusätzliche Erläuterungen der Figur 1:

KO (8) hat einen Druck von 2 bis 50 bar;
(12) ist eine $CO_2$-Nachfüllmöglichkeit,
(13) ist Lösungsmittel

Beispiele:

a) Allgemeine Vorschrift:

In einem Autoklaven von 1000 ml Volumeninhalt, ausgestattet mit einem Rührer und einem Bodenablaß, werden 600 ml einer 20 Gew.-%ige Polycarbonat-Methylenchlorid-Lösung vorgelegt. Das Polycarbonat hat eine relative Lösungsviskosität, gemessen mit Gelpermeationschromatographie bei 25°C und einer Polymerkonzentration von 5 g/ Liter in Methylenchlorid, von 1,28. Die Polymerlösung wird bei Raumtemperatur vorgelegt Anschließend wird durch Zugabe von Kohlendioxid ein Vor-Druck von 10 bar im Autoklaven aufgebaut und das Kohlendioxid für 3 Minuten bei einer 400 Umdrehungen Rührgeschwindigkeit eingemischt Anschließend wird der Bodenablaß geöffnet, der die Polycarbonat-Methylenchlorid-Kohlendioxid-Lösung in ein Rohr, Innendurchmesser 5 mm, drückt Das Rohr wird auf etwa 60°C beheizt. Nach einer Strecke von etwa 50 cm endet es in einer Zweistoffdüse, in welcher unter einem Druck von 100 bar 80°C warmes Kohlendioxid zugeführt und in einem Abscheidebehälter entspannt (Druck im Abscheidebehälter: 1 bar). Das sich am Boden des Behälters ansammelnde Polycarbonat-Pulver wird begutachtet

b) Versuchsparameter:

Beispiel 1

| Verwendete Düse: | Mischdüse mit Strahlmischung, Austritt des Innenteils auf gleicher Höhe mit Austritt des Mantelteils, Vermischung außerhalb der Düse |
|---|---|
| Vordruck im Autoklav: | 10 bar |
| Kohlendioxid-Druck: | 100 bar |

Die 20 %ige Polycarbonatlösung wird im Mantelraum der Düse zugeführt, Kohlendioxid im Innenraum. Die Zuleitung von der Kohlendioxid-Vorlage zur Düse wird auf 60°C beheizt

Beispiel 2

Verwendete Düse:    Mischdüse mit Innenvermischung

sonst wie Beispiel 1. Kohlendioxid und Polycarbonatlösung werden in der Düse zusammengeführt und mit Hilfe eines statischen Mischers vermengt. Der Vordruck im Polycarbonat-Vorlagebehälter beträgt 20 bar.

Beispiel 3

Wie Beispiel 1, jedoch wird zuerst Kohlendioxid durch die Düse geleitet und dann Polycarbonatlösung dazugemischt. Vordruck im Vorlagebehälter 20 bar.

Beispiel 4

Als Mischdüse wird eine Düse mit Strahlmischung verwendet. Polycarbonat wird dem Innenraum der Düse zugeführt, Kohlendioxid dem Mantelraum. Die Düsenöffnung wird mittels einer Kontermutter vom Austritt des Innenteils entfernt. Die Vermischung erfolgt innerhalb der Düse. Vordruck im Vorlagebehälter 20 bar, sonst wie Beispiel 1.

Beispiel 5

Wie Beispiel 1, jedoch Einmischen des Kohlendioxids unter einem Druck von 200 bar.

Beispiel 6

Wie Beispiel 1, jedoch Einmischen eines Kohlendioxid-Stickstoff-Gemisches (Zusammensetzung: 70 Gew.-% Kohlendioxid, 30 Gew.-% Stickstoff) bei 80°C und 300 bar.

c) Begutachtung der Isolierwirkung:

Von allen Proben im Abscheidebehälter wurden Differntial-Scanning-Calorimetrische Messungen sowie Thermogravimetrische Messungen durchgeführt. Die Proben hatten stets eine körnige Struktur und waren rieselfähig.
Restgehalt an Methylenchlorid:

Beispiel 1: <1 %
Beispiel 2: 3 %
Beispiel 3: 3 %
Beispiel 4: < 1 %
Beispiel 5: < 1 %
Beispiel 6: < 1 %

Die so gewonnenen Polycarbonat-Pulver lassen sich in bekannter Weise z.B. mit Hilfe einer Ausgasungsschnecke restausgasen und zu Granulat verarbeiten.

d) Nicht erfindungsgemäßes Beispiel:

Es wurde als Fluid reiner Stickstoff mit einer kritischen Temperatur von unter -140°C und einem kritischen Druck von etwa 34 bar in die Düse des Beispiels 1 bei einer Temperatur von 60°C und einem Druck von 300 bar zugegeben. Das Polymer-produkt im Abscheidebehälter war fladig, hatte keine gute Konsistenz und enthielt noch Methylenchlorid von mehr als 10 Gew.-%.

**Patentansprüche**

1. Verfahren zur Isolierung von Polycarbonaten aus ihren Lösungsmitteln durch Zugabe Kohlendioxid-haltiger Fluide; bei Temperaturen von 30°C bis 280°C und Drücken von 1 bar bis 1000 bar, in Mengen von 5 bis 5000 Gew.-%, bezogen auf das Gesamtgewicht an Polycarbonat und organischem Lösungsmittel, dadurch gekennzeichnet, daß die Konzentration der Polycarbonate in ihren Lösungsmitteln jeweils zwischen 5 Gew.-% und 80 Gew.-% beträgt, das Kohlendioxid-haltige Fluid aus mindestens 50 Gew.-% Kohlendioxid besteht, und daß der Polycarbonatlösung schon vor den Mischorganen bis zu 25 Gew.-%, bezogen auf die Menge an Polycarbonaten und Lösungsmittel, Kohlendioxid-haltiges Fluid zugemischt wird.

2. Verfahren nach Anspruch 1, dadurch gekennzeichnet, daß das restliche Kohlendioxid-haltige Fluid in einem statischen Mischer mit der Polycarbonatlösung vermischt wird und während oder nach dem Mischvorgang das Polycarbonat ausfällt.

3. Verfahren nach Anspruch 1 bis 2, dadurch gekennzeichnet, daß die Polycarbonat-Fluid-Lösung mit Hilfe einer Düse in einem Abscheidebehälter entspannt wird.

4. Verfahren nach Anspruch 1 und 3, dadurch gekennzeichnet, daß das restliche Kohlendioxid-haltige Fluid in einer Zweistoffdüse mit der Polycarbonatlösung vermischt wird und dabei die Gewichts-Einsatzverhältnisse von Fluid und Polycarbonatlösung so gewählt werden, daß das Polycarbonat in der Zweistoffdüse ausfällt.

5. Verfahren nach Anspruch 1 bis 4, dadurch gekennzeichnet, daß das Lösungsmittel Chlorbenzol, Methylenchlorid oder eine Mischung dieser beiden Lösungsmittel ist.

6. Verfahren nach Anspruch 1 bis 5, dadurch gekennzeichnet, daß zwischen Vermischung des Fluids mit der Polycarbonatlösung und seiner Entspannung noch eine Verweilzeit von wenigstens 1 Sekunde eingerichtet wird.

## Claims

1. Process for the isolation of polycarbonates from their solvents by the addition of fluids containing carbon dioxide at temperatures of 30°C to 280°C and pressures of 1 bar to 1000 bar, in quantities of 5 to 5000 wt.%, relative to the total weight of polycarbonate and organic solvent, characterised in that the concentration of the polycarbonates in their solvents is between 5 wt.% and 80 wt.%, the fluid containing carbon dioxide consists of at least 50 wt.% carbon dioxide and that up to 25 wt.%, relative to the quantity of polycarbonates and solvent, of fluid containing carbon dioxide is added to the polycarbonate solution upstream from the mixing units.

2. Process according to claim 1, characterised in that the remaining fluid containing carbon dioxide is mixed with the polycarbonate solution in a static mixer and the polycarbonate precipitates during or after the mixing operation.

3. Process according to claims 1 to 2, characterised in that the polycarbonate/fluid solution is depressurised through a nozzle into a separating vessel.

4. Process according to claims 1 and 3, characterised in that the remaining fluid containing carbon dioxide is mixed with the polycarbonate solution in a two-fluid nozzle and the ratio by weight of the fluid to polycarbonate solution is selected in such a manner that the polycarbonate precipitates in the two-fluid nozzle.

5. Process according to claims 1 to 4, characterised in that the solvent is chlorobenzene, methylene chloride or a mixture of these two solvents.

6. Process according to claims 1 to 5, characterised in that a residence time of at least one second is arranged between mixing the fluid with the polycarbonate solution and the depressurisation thereof.

## Revendications

1. Procédé d'isolement de polycarbonates de leurs solvants par addition de fluides contenant du dioxyde de carbone à des températures de 30°C à 280°C et des pressions de 1 bar à 1 000 bar, en quantités de 5 à 5 000 % en poids par rapport au poids total de polycarbonate et de solvant organique, caractérisé en ce que la concentration des polycarbonates dans leurs solvants est respectivement comprise entre 5 % en poids et 80 % en poids, que le fluide contenant du dioxyde de carbone se compose d'au moins 50 % en poids de dioxyde de carbone et que jusqu'à 25 % en poids de fluide contenant du dioxyde de carbone, par rapport à la quantité de polycarbonates et de solvants, sont déjà ajoutés à la solution de polycarbonate avant les organes de mélange.

2. Procédé selon la revendication 1, caractérisé en ce que le fluide résiduel contenant du dioxyde de carbone est mélangé dans un mélangeur statique avec la solution de polycarbonate et que le polycarbonate précipite pendant ou après l'opération de mélange.

3. Procédé selon les revendications 1 et 2, caractérisé en ce que la solution de polycarbonate-fluide est détendue au moyen d'une buse dans un séparateur.

4. Procédé selon les revendications 1 et 3, caractérisé en ce que le fluide résiduel contenant du dioxyde de carbone est mélangé à la solution de polycarbonate dans une buse binaire et que les rapports en poids de mise en oeuvre du fluide et de la solution de polycarbonate sont choisis de façon que le polycarbonate précipite dans la buse binaire.

5. Procédé selon les revendications 1 à 4, caractérisé en ce que le solvant est du chlorobenzène, du chlorure de méthylène ou un mélange de ces deux solvants.

6. Procédé selon les revendications 1 à 5, caractérisé en ce qu'un temps de séjour d'au moins 1s est encore ménagé entre le mélange du fluide avec la solution de polycarbonate et sa détente.

FIG.1